# EUROPÄISCHE PATENTSCHRIFT

(11) **EP 1 142 421 B1**
(45) Veröffentlichungstag und Bekanntmachung des Hinweises auf die Patenterteilung: **26.04.2006**
(21) Anmeldenummer: 99966814.8
(22) Anmeldetag: 01.12.1999
(51) Int. Cl.: H04Q 7/38

(54) **VERFAHREN ZUR DATENÜBERTRAGUNG IN EINEM MOBILFUNKSYSTEM, MOBILSTATION UND BASISSTATION**
METHOD FOR DATA TRANSMISSION IN MOBILE RADIO SYSTEMS, MOBILE STATION AND BASE STATION
PROCEDE DE TRANSMISSION DE DONNEES DANS UN SYSTEME RADIOTELEPHONIQUE MOBILE, UNE STATION MOBILE ET UNE STATION DE BASE

(30) Priorität: 15.12.1998 DE 19857820
(43) Veröffentlichungstag der Anmeldung: 10.10.2001
(73) Patentinhaber: SIEMENS AKTIENGESELLSCHAFT, 80333 München (DE)
(72) Erfinder: RAAF, Bernhard, D-81475 München (DE); WILHELM, Hartmut, D-81477 München (DE)
(86) Internationale Anmeldenummer: PCT/DE1999/003826
(87) Internationale Veröffentlichungsnummer: WO 2000/036865

(56) Entgegenhaltungen:
- WO-A-94/29981
- WO-A-97/25827

## Beschreibung

Die Erfindung betrifft eine Basisstation, eine Mobilstation und ein Verfahren zur Datenübertragung in einem Kommunikationssystem, insbesondere in einem CDMA-Mobilfunksystem, wobei die Daten strukturiert in Rahmen übertragen werden und wobei eine Basisstation die Daten derart sendet, daß es einer die Daten empfangenden Mobilstation möglich ist, während einer oder mehrerer Unterbrechungsphasen, in der bzw. in denen sie das Empfangen (der bisherigen Quelle oder der Daten der Basisstation) und/oder das Verarbeiten empfangener Daten unterbricht, andere Funktionen auszuführen, insbesondere über eine Empfangseinrichtung Messungen durchzuführen.

In Kommunikationssystemen werden Daten (beispielsweise Sprachdaten, Bilddaten oder Systemdaten) auf Ubertragungsstrecken zwischen Basisstationen und Mobilstationen übertragen. Bei Funk-Kommunikationssystemen erfolgt dies mit Hilfe von elektromagnetischen Wellen über eine Luft- oder Funkschnittstelle. Dabei werden Trägerfrequenzen genutzt, die in dem für das jeweilige System vorgesehenen Frequenzband liegen. Beim GSM (Global System for Mobile Communications) liegen die Trägerfrequenzen im Bereich von 900 MHz. Für zukünftige Funk-Kommunikationssysteme, beispielsweise das UMTS (Universal Mobile Telecommunication System) oder andere Systeme der dritten Generation sind Frequenzen im Frequenzband von 2.000 MHz vorgesehen.

Insbesondere in zukünftigen CDMA-Systemen wird in Abwärtsrichtung, das heißt in der Richtung von einer Basisstation zu einer Mobilstation, von der Basisstation im wesentlichen kontinuierlich gesendet. Die beim Senden übertragenen Daten sind üblicherweise in Rahmen strukturiert, die jeweils eine vorgegebene Länge haben. Insbesondere bei unterschiedlichen Diensten, wie Sprachdatenübertragung und Videodatenübertragung, können die Rahmen auch unterschiedliche Struktur und Länge haben. Die Struktur und/oder Länge jedes Rahmens in einer kontinuierlichen Folge von Rahmen ist jedoch vorgegeben und/oder wird durch die Mobilstation erkannt.

Insbesondere in zellularen Mobilfunksystemen muß die Mobilstation gelegentlich auch andere Funktionen als Datenempfang ausführen, die zumindest beim Betrieb nur einer einzigen Empfangseinrichtung nicht gleichzeitig ausgeführt werden können. Beispielsweise muß die Mobilstation in einem zellular aufgebauten Funk-Kommunikationssystem, in dem die Basisstationen verschiedener Zellen auf unterschiedlichen Frequenzen senden, von Zeit zu Zeit messen, ob sie Funksignale von einer anderen Basisstation mit guter Empfangsqualität empfangen kann. Hierzu stellt die Mobilstation ihre Empfangseinrichtung auf eine andere Frequenz als die Frequenz ein, auf der sie momentan Daten empfängt.

Um ohne Unterbrechung von der Basisstation zu der Mobilstation senden zu können, wurde bereits vorgeschlagen, die Mobilstation mit einer zweiten Empfangseinrichtung auszustatten. Aus Kostengründen wird diese Lösung in der Praxis jedoch meist abgelehnt.

Es ist ein anderer Vorschlag bekannt, nach welchem die Basisstation das Senden zu vorgegebenen Zeiten unterbricht, um es der Empfangsstation zu ermöglichen, eine Nachbarkanalsuche (Suche nach einer benachbarten Basisstation oder nach von diesen Basisstationen ausgesendeten bestimmten Datenpaketen, worunter im folgenden auch Synchronisations- oder Pilotsignalbursts verstanden werden können) über ihre einzige Empfangseinrichtung durchzuführen.

Um einen Datenverlust zu vermeiden, sendet die Basisstation die Daten zuvor mit einer höheren Senderate als mit der im wesentlichen konstanten Dauer-Senderate. Damit dies nicht zu höheren Bitfehlerraten (BER) führt, muß zusätzlich während dieser Zeit die Sendeleistung erhöht werden.

Da mit der Anzahl der eingefügten Unterbrechungsphasen auch die Einbußen in der Übertragungsqualität zunehmen, besteht der Wunsch, möglichst wenige Unterbrechungsphasen einzulegen.

Aus der WO-A-94/29981 ist es bekannt, dass eine Basisstation die Übertragung in bestimmten Zeiten unterbricht.

Aufgabe der vorliegenden Erfindung ist es, ein Verfahren zur Datenübertragung der eingangs genannten Art, eine Mobilstation und eine Basisstation anzugeben, die bei guter Übertragungsqualität eine Beobachtung zweiter Basisstationen ermöglichen.

Die Aufgabe wird durch die unabhängigen Patentansprüche gelöst. Weiterbildungen sind Gegenstand der abhängigen Ansprüche.

Die Erfindung beruht auf dem Gedanken, entgegen dem Stand der Technik Unterbrechungsphasen nicht mit einer maximal effektiven Gesamtdauer einzufügen, die bei optimalen oder guten Übertragungsverhältnissen zu einer gesicherten Detektion eines zu detektierenden Datenpaketes nötig wäre, sondern weniger und/oder kürzere Unterbrechungsphasen einzufügen und in Abhängigkeit von der Feldstärke einer abzusuchenden Frequenz,
und/oder in Abhängigkeit von einer Statistik des Empfangssignals,
und/oder in Abhängigkeit von einer Feldstärke auf Nachbarkanälen,
und/oder in Abhängigkeit von einer Dringlichkeit einer Suche, und/oder in Abhängigkeit vom Ergebnis zuvor ausgeführter Suchen,
und/oder in Abhängigkeit von Informationen über die Erfolgsaussichten einer Suche nach zu detektierenden Datenpaketen,
und/oder in Abhängigkeit von Informationen über die Abhängigkeit der Erfolgsaussichten einer Suche nach zu detektierenden Datenpaketen von der maximalen effektiven Gesamtdauer der Unterbrechungsphasen die maximale effektive Gesamtdauer der Unterbrechungsphasen zu variieren.

Dadurch wird die effektive Gesamtdauer der Unterbrechungsphasen verkürzt und somit die Übertragungsqualität von der ersten Basisstation zu einer Mobilstation verbessert.

Unter GSM-Rahmen versteht man im Rahmen der Anmeldung auch einen Rahmen, der 8 Zeitschlitze enthält und eine Dauer von 4,6 ms aufweist.

Unter Beobachtungsrahmen versteht man im Rahmen der Anmeldung auch eine Zeitdauer, die mindestens erforderlich ist, um einen GSM-Rahmen zu beobachten. Die genaue Dauer eines Beobachtungsrahmens ist dabei implementierungsabhängig; sie ist jedoch, um eine vollständige Detektion eines GSM-Rahmens zu gewährleisten, und unter Berücksichtigung der Umschaltzeit für den Synthesizer in der Regel länger als die Dauer eines GSM-Rahmens und kann so auch eine Dauer von 9 Zeitschlitzen, 10 Zeitschlitzen (5,7 ms), 11 Zeitschlitzen oder 12 Zeitschlitzen (6,9 ms) aufweisen.

Da zur Einlegung der Unterbrechungsphasen zum Zwecke der Nachbarkanalsuche viele unterschiedliche Varianten möglich sind, bezeichnet im Rahmen dieser Anmeldung der Begriff "maximale effektive Gesamtdauer der Unterbrechungsphasen" die Summe aller Unterbrechungsphasen, die maximal zur Beobachtung einer Nachbarbasisstation eingelegt werden. Dies schließt jedoch nicht aus, daß bei einer späteren Wiederholung der Nachbarkanalsuche weitere Unterbrechungsphasen eingelegt werden, wobei allerdings eine neue effektive Gesamtdauer der Unterbrechungsphasen gebildet wird. Die einzelnen Unterbrechungsphasen können dabei jeweils die Dauer eines Beobachtungsrahmens aufweisen, können aber auch von beliebig anderer Dauer sein. Die Dauer einer Unterbrechungsphase kann auch ein Vielfaches oder einen Bruchteil der Dauer eines Beobachtungsrahmens aufweisen. Es ist auch möglich, daß die einzelnen Unterbrechungsphasen unterschiedliche Dauer haben.

Eine Weiterbildung der Erfindung sieht vor, in der Regel Unterbrechungsphasen mit einer effektiven Gesamtdauer von maximal 10 Beobachtungsrahmen einzulegen.

Durch aufwendige Simulationen mit eigens für diesen Zweck entwickelten Simulationswerkzeugen stellte sich heraus, daß dadurch die effektive Gesamtdauer der Unterbrechungsphasen um einen viel größeren Anteil reduziert werden kann, als im Gegenzug die theoretische Detektionswahrscheinlichkeit für ein zu detektierendes Datenpaket abnimmt.

Eine andere Weiterbildung der Erfindung sieht vor, daß zwischen dem Beginn einer ersten Unterbrechungsphase und dem Beginn einer zweiten Unterbrechungsphase eine Dauer von 52 GSM-Rahmen liegt.

Es konnte durch Simulationen gezeigt werden, daß damit die effektive Gesamtdauer der Unterbrechungsphasen auf 91 % reduziert werden kann, wobei man im Gegenzug bei der Detektionswahrscheinlichkeit nur einen Verlust von 2 % in Kauf nehmen muß, sowie eine Halbierung der Suchgeschwindigkeit gegenüber der GSM-Suchgeschwindigkeit.

Eine andere Ausgestaltung der Erfindung sieht vor, zwischen dem Beginn einer ersten Unterbrechungsphase und dem Beginn einer zweiten Unterbrechungsphase eine Dauer von 6 GSM-Rahmen einzufügen, und zwischen dem Beginn einer zweiten Unterbrechungsphase und dem Beginn einer dritten Unterbrechungsphase eine Dauer von 46 GSM-Rahmen einzufügen.

Hier konnte durch Simulationen gezeigt werden, daß bei GSM-Suchgeschwindigkeit die maximale effektive Gesamtdauer der Unterbrechungsphasen um 9 % reduziert werden kann bei einem vergleichsweise sehr geringen Verlust an Detektionswahrscheinlichkeit von 2 %.

Eine Weiterbildung der Erfindung sieht vor, daß schon vor Erreichen der maximalen effektiven Gesamtdauer der Unterbrechungsphasen das Einlegen weiterer Unterbrechungsphasen beendet, eingeschränkt oder gesteuert fortgesetzt wird. Dazu wird nach dem Empfang eines zu detektierenden Datenpaketes oder eventuell eines anderen das Ende der Nachbarkanalsuche indizierenden Datenpaketes, wie beispielsweise eines charakteristischen Datenpaketes, eine entsprechende Nachricht von der Mobilstation zur ersten Basisstation übermittelt.

So ist es möglich, das Einlegen von Unterbrechungsphasen möglichst bald zu beenden und somit möglichst einzuschränken, sobald genügend Informationen über die zu beobachtenden zweiten Basisstationen bekannt sind, und somit die Übertragungsqualität zu verbessern. Dadurch wird erreicht, daß die Gesamtdauer der Unterbrechungsphasen weiter reduziert werden kann.

Anhand der Zeichnungen werden nun Ausführungsbeispiele der Erfindung näher beschrieben. Die Erfindung ist jedoch nicht auf diese Ausführungsbeispiele beschränkt. Die einzelnen Figuren der Zeichnung zeigen:
- Fig. 1: Prinzipschaltbild eines Mobilfunksystems;
- Fig. 2: Prinzipschaltbild einer Mobilstation;
- Fig. 3: schematische Darstellung der Einfügung von Unterbrechungsphasen während einer Sendephase.

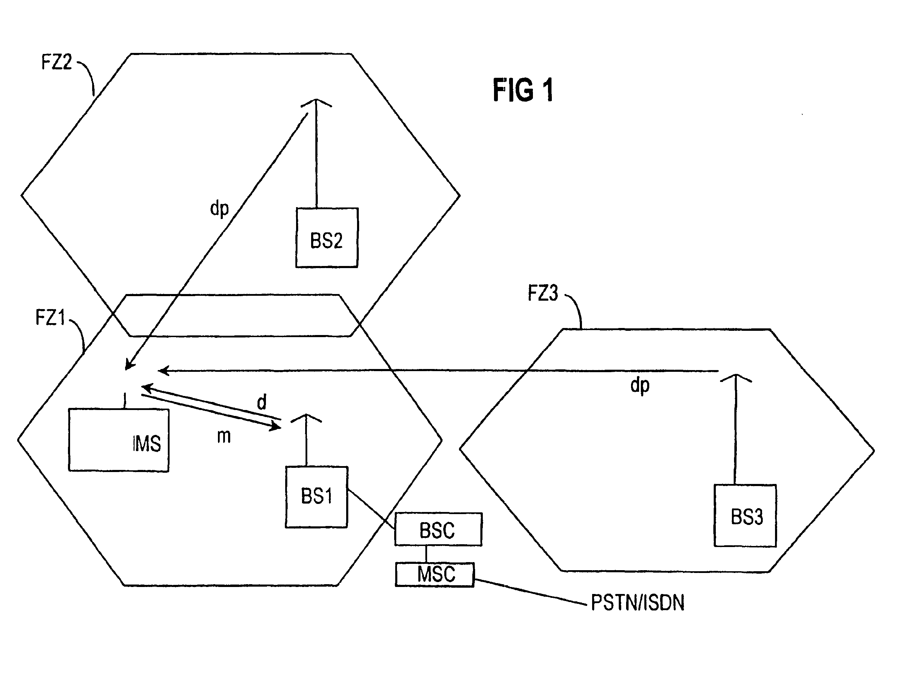

In Figur 1 ist ein zellulares Mobilfunknetz, das beispielsweise aus einer Kombination eines GSM (Global System for Mobile Communications)-Systems mit einem UMTS (Universal Mobile Telecommunication System) - System besteht, dargestellt, das aus einer Vielzahl von Mobilvermittlungsstellen MSC besteht, die untereinander vernetzt sind, bzw. den Zugang zu einem Festnetz PSTN/ISDN herstellen. Ferner sind diese Mobilvermittlungsstellen MSC mit jeweils zumindest einem Basisstationscontroller BSC verbunden, der auch durch ein Datenverarbeitungssystem gebildet sein kann.

Jeder Basisstationscontroller BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignale Informationen innerhalb von Funkkanälen, die innerhalb von Frequenzbändern liegen, übertragen werden. Die Reichweite der Funksignale einer Basisstation definieren im wesentlichen eine Funkzelle FZ.

Basisstationen BS und ein Basisstationscontroller BSC können zu einem Basisstationssystem zusammengefaßt werden. Das Basisstationssystem ist dabei auch für die Funkkanalverwaltung bzw. -zuteilung, die Datenratenanpassung, die Überwachung der Funkübertragungsstrecke, Hand-Over-Prozeduren, und im Falle eines CDMA-Systems für die Zuteilung der zu verwendenden Spreizcodesets zuständig und übermittelt die dazu nötigen Signalisierungsinformationen zu den Mobilstationen MS.

Im Falle eines Duplex-Systems können bei FDD (Frequency Division Duplex)-Systemen, wie beispielsweise dem GSM-System, für den Uplink (Mobilstation zur Basisstation) andere Frequenzbänder vorgesehen sein als für den Downlink (Basisstation zur Mobilstation) und bei TDD (Time Division Duplex)-Systemen, wie dem DECT (Digital Enhanced Cordless Telecommunications)-System, für den Up- bzw. Downlink unterschiedliche Zeitabschnitte vorgesehen sein. Innerhalb der unterschiedlichen Frequenzbänder können durch ein FDMA (Frequency Division Multiple Access) Verfahren mehrere Frequenzkanäle realisiert werden.

Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme wie CDMA-Systeme, insbesondere Wide-Band-CDMA-Systeme oder TD/CDMA-Systeme abgebildet werden. Unter erster Basisstation BS1 versteht man insbesondere eine UMTS-Basisstation oder eine CDMA-Basisstation, unter zweiten und/oder dritten Basisstationen BS2, BS3 insbesondere zu beobachtende GSM-(Nachbar)Basisstationen und unter Mobilstation insbesondere eine Dualmode-Mobilstation, die sowohl für den Empfang von GSM-Signalen als auch für den Empfang von UMTS-Signalen oder CDMA-Signalen ausgestaltet ist, die gegebenenfalls auch für einen stationären Betrieb hergerichtet sein kann.

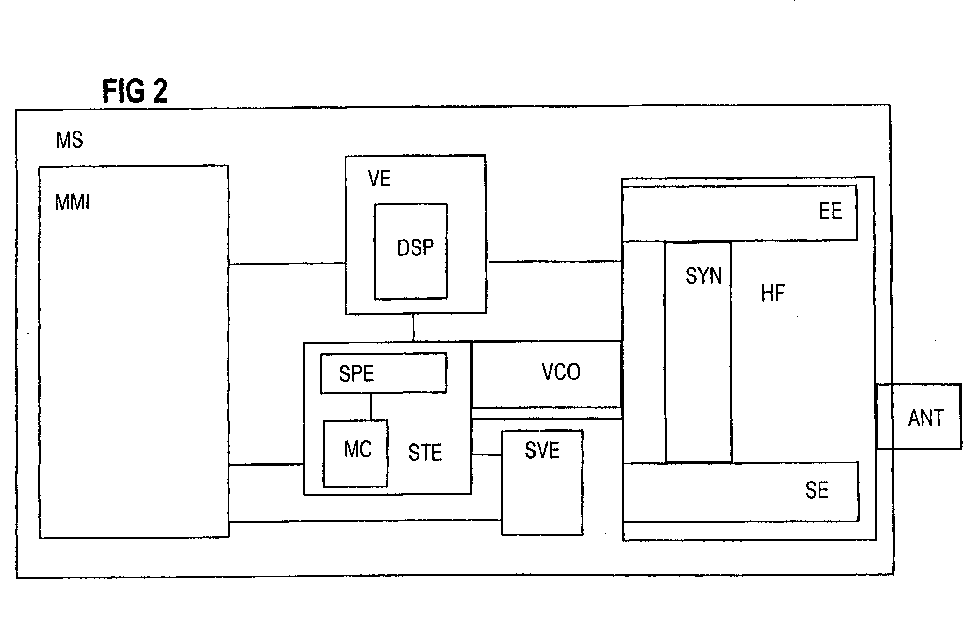

Figur 2 zeigt eine Funkstation, die eine Mobilstation MS sein kann, bestehend aus einer Bedieneinheit MMI, einer Steuereinrichtung STE, einer Verarbeitungseinrichtung VE, einer Stromversorgungseinrichtung SVE, einer Empfangseinrichtung EE und einer Sendeeinrichtung SE.

Die Steuereinrichtung STE besteht im wesentlichen aus einem programmgesteuerten Mikrocontroller MC, der schreibend und lesend auf Speicherbausteine SPE zugreifen kann. Der Mikrocontroller MC steuert und kontrolliert alle wesentlichen Elemente und Funktionen der Funkstation, steuert im wesentlichen den Kommunikations- und Signalisierungsablauf, reagiert auf Tastatureingaben, indem er die entsprechenden Steuerprozeduren ausführt, und ist auch für die Versetzung des Gerätes in unterschiedliche Betriebszustände zuständig.

Die Verarbeitungseinrichtung VE kann auch durch einen digitalen Signalprozessor DSP gebildet sein, der ebenfalls auf Speicherbausteine SPE zugreifen kann.

In den flüchtigen oder nicht flüchtigen Speicherbausteinen SPE sind die Programmdaten, die zur Steuerung der Funkstation und des Kommunikationsablaufs, insbesondere auch der Signalisierungsprozeduren, benötigt werden, Geräteinformationen, vom Benutzer eingegebene Informationen und während der Verarbeitung von Signalen entstehende Informationen gespeichert. Bei den Speichereinrichtungen kann es sich auch um Speicherzellen oder Speicherbausteine oder um Register oder um einen Teilbereich auf einem Chip, als Cache oder Register in einem Mikroprozessor/DSP oder um einen separaten Chip handeln.

Der Hochfrequenzteil HF besteht aus der Sendeeinrichtung SE mit einem Modulator und einem Verstärker sowie aus einer Empfangseinrichtung EE mit einem Demodulator und ebenfalls einem Verstärker.

Der Sendeeinrichtung SE und der Empfangseinrichtung EE wird über den Synthesizer SYN die Frequenz eines spannungsgesteuerten Oszillators VCO zugeführt. Mittels des spannungsgesteuerten Oszillators VCO kann auch der Systemtakt zur Taktung von Prozessoreinrichtungen des Gerätes erzeugt werden.

Zum Empfang und zum Senden von Signalen über die Luftschnittstelle eines Mobilfunksystems ist mindestens eine Antenneneinrichtung ANT vorgesehen.

Bei der Funkstation kann es sich auch um eine Basisstation BS handeln. In diesem Fall wird die Bedieneinheit durch eine Verbindung zu einem Mobilfunknetz, beispielsweise über einen Basisstationscontroller BSC bzw. eine Vermittlungseinrichtung MSC, ersetzt. Um gleichzeitig Daten mit mehreren Mobilstationen MS auszutauschen, kann die Basisstation BS über eine entsprechende Vielzahl von Sende- bzw. Empfangseinrichtungen verfügen.

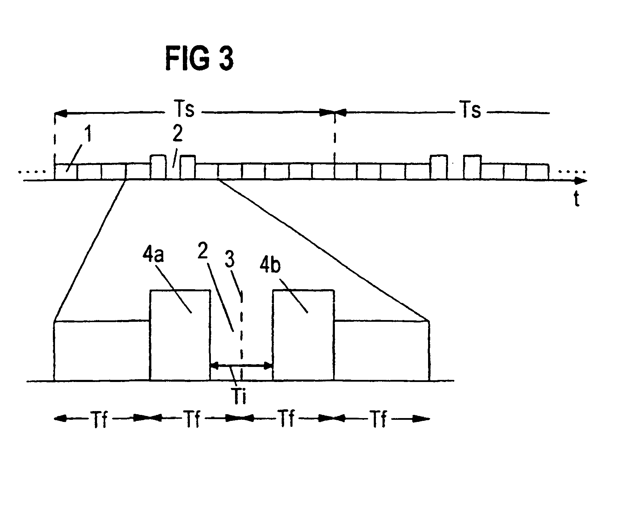

Fig. 3 zeigt die Rahmenstruktur einer Datenübertragung mit geringer Verzögerungszeit, insbesondere der Sprachübertragung in einem UMTS (Universal Mobile Telecommunication System), in dem jeweils innerhalb eines Multirahmens zwölf einzelne Rahmen 1 zur Datenübertragung enthalten sind. Dabei zeigt die Darstellung insbesondere eine Sendephase im Downlink von einer ersten Basisstation BS1, insbesondere einer UMTS-Basisstation BS1 zu einer Mobilstation MS, insbesondere einer Dualmode-Mobilstation MS, die neben dem Empfang von UMTS-Daten auch für den Empfang von GSM-Datenpaketen ausgestaltet ist.

Die einzelnen Rahmen 1 haben jeweils eine Sendelänge Tf von 10 ms, so daß der Multirahmen insgesamt eine Sendelänge Ts von 120 ms hat. Jeweils der fünfte und der sechste einzelne Rahmen 1 weisen eine gemeinsame, gegebenenfalls ihre Rahmengrenze 3 überlappende Unterbrechungsphase 2 auf, die eine Länge Ti hat. Die Länge Ti beträgt beispielsweise 6 ms. Die Teilabschnitte des ersten Rahmens 4a, der vor der Unterbrechungsphase 2 beginnt, und des zweiten Rahmens 4b, der nach der Unterbrechungsphase 2 endet, sind gleich lang beziehungsweise gleich groß. Dabei wird während der Unterbrechungsphasen zumindest das Senden von Daten zu einer bestimmten, die Nachbarkanalsuche durchführenden Mobilstation unterbrochen, während das Senden zu anderen Mobilstationen fortgesetzt werden kann, was durch den Einsatz eines Vielfachzugriffsverfahrens, beispielsweise eines CDMA-Verfahrens, ermöglicht wird.

Bei dem in Fig. 3 gezeigten Ausführungsbeispiel werden Sprachdaten übertragen, so daß eine maximale Verzögerung bei der Auswertung der von der Mobilstation empfangenen Daten in Höhe von 10 ms, das heißt einer Rahmenlänge Tf, akzeptabel ist. Die Daten innerhalb eines Rahmens werden umsortiert, gemeinsam codiert und einander überlagert gesendet. Im Ausführungsbeispiel werden die Senderate des ersten Rahmens 4a und des zweiten Rahmens 4b jeweils derart erhöht, daß die gleiche Menge von zu sendenden Informationen, die in nicht komprimierten Rahmen 1 über die Rahmenlänge Tf hinweg gesendet werden, in einem Zeitraum Tc = Tf - Ti/2 gesendet werden.

Beispielsweise während sich die Mobilstation MS im Gesprächszustand oder Nutzdatenübertragungszustand mit einer aktuellen UMTS-Basisstation BS1 befindet, werden die Unterbrechungsphasen zu bestimmten Zeitpunkten/-abschnitten, zwischen denen feste oder unterschiedlich lange Zeiträume liegen können, in die Downlinkübertragung eingefügt, während derer die Empfangseinrichtung der Mobilstation MS auf den Empfang von Datenpaketen von jeweils benachbarten GSM-Basisstationen BS2,BS3 geschaltet wird.

Während der Unterbrechungsphase 2 unterbricht die UMTS-Basisstation das Senden von Daten zur Mobilstation MS und die Mobilstation MS das Empfangen von Daten, die von der UMTS-Basisstation BS1 gesendet werden. Die Mobilstation MS führt mittels der Empfangseinrichtung EE eine Nachbarkanalsuche durch, indem die Steuereinrichtung STE die Empfangseinrichtung EE auf dem Empfang von benachbarten GSM-Basisstationen BS2 schaltet, um gegebenenfalls auftretende Synchronisationsdatenpakete dp, die von benachbarten GSM-Basisstationen BS2, BS3 gesendet werden, zu empfangen.

BS1 kann der MS Frequenzen des GSM-FDMA-Rasters übermitteln, auf denen BS2, BS3 für die Identifikation, Synchronisation, Kanalgüteschätzung und Ähnliches geeigneten Signale ausstrahlen.

Ein durch die GSM-Basisstation ausgesendeter GSM-Rahmen enthält acht Zeitschlitze, in denen jeweils ein Datenpaket enthalten ist. Die von den GSM-Basisstationen BS2 ausgesendeten Datenpakete, wie z.B. Synchronisationsdatenpakete (zu detektierende Datenpakete, Synchronisationburst SB), Frequenzkorrekturdatenpakete (charakteristische Datenpakete, Frequencycorrectionburst FB) und Normaldatenpakete gehorchen alle dem gleichen Zeitraster. Von den GSM-Basisstationen werden 4 mal alle 10 Zeitrahmen (GSM-Rahmen) und daraufhin nach 11 Zeitrahmen (GSM-Rahmen)(insgesamt 51 Zeitrahmen) ein Frequenzkorrekturdatenpaket und jeweils einen Zeitrahmen später ein Synchronisationsdatenpaket ausgesendet. Würden nun Unterbrechungsphasen entsprechend dem GSM-Standard mit einer Periode von 26 Zeitrahmen (GSM-Rahmen) eingefügt, so würde aufgrund der Tatsache, daß die Periode von 51 Zeitrahmen und die Periode von 26 Zeitrahmen keinen gemeinsamen Teiler haben, eine zyklische Verschiebung der beiden Zeitrahmenperioden stattfinden, so daß nach maximal 11 mal 26 Zeitrahmen, also nach 11 Beobachtungsrahmen ein Empfang des gesuchten zu detektierenden Datenpaketes erfolgen würde, falls die Mobilstation nicht zu weit von der jeweiligen benachbarten Basisstation BS2, BS3 entfernt ist oder zu starke Störungen bei der Übertragung auftreten.
Wird nun die maximale effektive Gesamtdauer der Unterbrechungsphasen entgegen dem Stand der Technik bei der Beobachtung von GSM-Basisstationen während der Gesprächsphase einer Mobilstation mit einer UMTS-Basisstation BS1 von 11 Beobachtungsrahmen auf beispielsweise 10 oder 9 Beobachtungsrahmen reduziert, so kann die Datenübertragung im Rahmen des Gesprächs der Mobilstation MS über die Basisstation BS1 verbessert werden. Die damit verbundene Reduzierung der Detektionswahrscheinlichkeit ist vergleichsweise gering und somit akzeptabel.

Eine Ausführungsvariante der Erfindung sieht vor, daß zu detektierende Datenpakete von einer zweiten Basisstation BS2 innerhalb von GSM-Rahmen übertragen werden und daß zwischen dem Beginn einer ersten Unterbrechungsphase und einer zweiten Unterbrechungsphase eine Dauer von 52 GSM-Rahmen liegt.

Eine andere Ausführungsvariante der Erfindung sieht vor, daß die zweite Basisstation BS2 gemäß dem GSM-Standard oder einem davon abgeleiteten Standard funktioniert, zu detektierende Datenpakete von einer zweiten Basisstation BS2 innerhalb von GSM-Rahmen übertragen werden und daß zwischen dem Beginn einer ersten Unterbrechungsphase und einer zweiten Unterbrechungsphase eine Dauer von 26 GSM-Rahmen liegt.

Eine andere Ausführungsvariante der Erfindung sieht vor, daß zwischen dem Beginn einer ersten Unterbrechungsphase und einer zweiten Unterbrechungsphase eine Dauer von n1 GSM-Rahmen liegt und daß zwischen dem Beginn einer zweiten Unterbrechungsphase und einer dritten Unterbrechungsphase eine Dauer von n2 GSM-Rahmen liegt.

Eine andere Ausführungsvariante der Erfindung sieht vor, daß zwischen dem Beginn einer ersten Unterbrechungsphase und einer zweiten Unterbrechungsphase eine Dauer von 6 GSM-Rahmen liegt und daß zwischen dem Beginn einer zweiten Unterbrechungsphase und einer dritten Unterbrechungsphase eine Dauer von 46 GSM-Rahmen liegt.

Eine andere Ausführungsvariante der Erfindung sieht vor, daß zwischen dem Beginn einer ersten Unterbrechungsphase und einer zweiten Unterbrechungsphase eine Dauer von 16 GSM-Rahmen liegt und daß zwischen dem Beginn einer zweiten Unterbrechungsphase und einer dritten Unterbrechungsphase eine Dauer von 36 GSM-Rahmen liegt.

Empfängt bei einer Ausführungsvariante der Erfindung die Mobilstation MS in einer dieser Unterbrechungsphasen ein zu detektierendes Synchronisationsdatenpaket, so ist die Nachbarkanalsuche zumindest hinsichtlich dieser Basisstation BS2 beendet, und die Mobilstation MS sendet entsprechende Steuerinformationen m zur ersten Basisstation BS1, der UMTS-Basisstation. Die UMTS-Basisstation fügt daraufhin zunächst keine weiteren Unterbrechungsphasen in den Downlink-Datenstrom d ein.

Da im GSM-System die Frequenzkorrekturdatenpakete einen Zeitrahmen vor den Synchronisationsdatenpaketen von den Basisstationen BS2,BS3 ausgesendet werden, kann die Mobilstation MS bei einer Ausführungsvariante der Erfindung auch auf den Empfang von Frequenzkorrekturdatenpaketen FB geschaltet werden. Dabei unterbricht die UMTS-Basisstation während der Unterbrechungsphase 2 das Senden von Daten zur Mobilstation MS und die Mobilstation MS das Empfangen von Daten, die von der UMTS-Basisstation BS1 gesendet werden. Die Mobilstation MS führt mittels der Empfangseinrichtung EE eine Nachbarkanalsuche durch, indem die Steuereinrichtung STE die Empfangseinrichtung EE auf den Empfang von benachbarten GSM-Basisstationen BS2 schaltet, um gegebenenfalls auftretende Synchronisationsdatenpakete SB und Frequenzkorrekturdatenpakete FB, die von benachbarten GSM-Basisstationen BS2, BS3 gesendet werden, zu empfangen.

Unter dem Begriff "die Mobilstation wird auf den Empfang zu detektierender und auf den Empfang charakteristischer Datenpakete geschaltet" oder "kombinierte FB/SB-Suche" versteht man im Rahmen dieser Anmeldung auch, daß nach der üblichen analogen und digitalen Filterung und gegebenenfalls einer Derotation das empfangene Datenpaket sowohl mit der der Trainingssequenz eines charakteristischen Datenpaketes dp(FB) als auch mit der der Trainingssequenz eines zu detektierenden Datenpaketes dp(SB) entsprechenden Korrelationsfolge verglichen (z.B. korreliert) wird und somit gleichzeitig bzw. parallel nach zu detektierenden und nach charakteristischen Datenpaketen gesucht wird. Statt einer Korrelation können ggf. auch andere Verfahren angewandt werden (z.B. FIR, IRR oder andere Filter) .

Bei einer Ausführungsvariante kann die Mobilstation nach dem Empfang eines Frequenzkorrekturdatenpaketes Informationen zur UMTS-Basisstation BS1 senden, die bewirken, daß zunächst nur noch eine weitere Unterbrechungsphase in den gesendeten Datenstrom eingelegt wird, um das in einem festen Abstand auf das Frequenzkorrekturdatenpaket folgende Synchronisationsdatenpaket zu empfangen. Aufgrund der Kenntnis über die relative zeitliche Position zwischen Frequenzkorrekturdatenpaket und Synchronisationsdatenpaket können die zeitliche Lage und auch die Dauer (da der Zeitschlitz nun bekannt ist) der einzufügenden Unterbrechungsphase an die zeitliche Lage des zu detektierenden Synchronisationsdatenpaketes angepaßt werden.

Eine andere Ausführungsvariante der Erfindung sieht vor, daß zunächst auf die Beobachtung einer ersten benachbarten GSM-Basisstation BS1 geschaltet wird, nach erfolgreicher Suche oder nach Kenntnis über eine nicht erfolgreiche Suche die Nachbarkanalsuche für eine oder mehrere weitere GSM-Basisstationen BS3 durchgeführt wird, und nach erfolgreicher und/oder erfolgloser Beendigung der Nachbarkanalsuche für mehrere benachbarte GSM-Basisstationen BS2,BS3 Informationen m zur Beeinflussung und/oder Einschränkung und/oder Beendigung und/oder gesteuerten Fortsetzung des Einlegens von Unterbrechungsphasen zur UMTS-Basisstation BS1 übermittelt werden. Dazu können die zunächst ermittelten Ergebnisse der Nachbarkanalsuche mittels Speichereinrichtungen SPE in der Mobilstation MS zwischengespeichert werden.

Bei einer Weiterbildung der Erfindung werden die Ergebnisse der Nachbarkanalsuche, beispielsweise die Identität der Nachbarbasisstation und die Empfangsqualität oder Feldstärke der von den Nachbarbasisstationen empfangenen Signale zusammen mit den Informationen zur Beeinflussung des Einlegens von Unterbrechungsphasen als eine Nachricht, die gegebenenfalls auf mehrere Rahmen aufgeteilt sein kann, zur UMTS-Basisstation BS1 übermittelt.

Bei einer anderen Ausgestaltungsvariante der Erfindung handelt es sich auch bei der ersten Basisstation BS1 um eine GSM-Basisstation, die Daten gemäß einem GSM-Standard oder einem davon abgeleiteten Standard überträgt.

Bei einer weiteren Ausgestaltung der Erfindung wird die maximale effektive Gesamtdauer der Unterbrechungen bei der Beobachtung von GSM-Basisstationen nicht ausnahmslos von 11 Beobachtungsrahmen (6 bei kombinierter FB-/SB-Suche) auf 10 (5 bei kombinierter FB-/SB-Suche) oder weniger verkürzt, sondern der Aufwand beim Fortsetzen der Suche gegen den zu erwartenden Nutzen abgewogen. Dazu können in Abhängigkeit von Informationen über die Erfolgsaussichten einer Suche nach charakteristischen und/oder zu detektierenden Datenpaketen und/oder in Abhängigkeit von Informationen über die Abhängigkeit der Erfolgsaussichten einer Suche nach charakteristischen und/oder zu detektierenden Datenpaketen von der maximalen effektiven Gesamtdauer der Unterbrechungsphasen die maximale effektive Gesamtdauer der Unterbrechungsphasen variiert werden.

Diese Einschränkung ermöglicht beispielsweise, daß in dem unwahrscheinlichen Fall, daß nach 10 Beobachtungsrahmen (5 bei kombinierter FB-/SB-Suche) trotz guter Funkbedingungen das zu detektierende Datenpaket noch nicht gefunden wurde, ein elfter Beobachtungsrahmen (sechster bei kombinierter FB-/SB-Suche) genutzt wird, denn für diesen ergibt sich bei einwandfreien Funkverhältnissen eine große bedingte Wahrscheinlichkeit, ein gewünschtes Datenpaket zu detektieren.

Folgende Kriterien, die vom Verhältnis zwischen Aufwand und Nutzen abhängen und/oder Informationen über die Erfolgsaussichten einer Suche nach charakteristischen und/oder zu detektierenden Datenpaketen und/oder Informationen über die Abhängigkeit der Erfolgsaussichten einer Suche nach charakteristischen und/oder zu detektierenden Datenpaketen von der maximalen effektiven Gesamtdauer der Unterbrechungsphasen können beispielsweise zur Entscheidung über eine verkürzte Suche herangezogen wird (Unter verkürzte Suche versteht man dabei auch die Variation der maximalen effektiven Gesamtdauer der Unterbrechungsphasen):
- Feldstärke der abzusuchenden Frequenz:
   Es lohnt sich insbesondere dann weiterzusuchen, wenn ein Träger mit ununterbrochen hoher Feldstärke empfangen wurde, denn dann kann ein zu detektierendes Datenpaket kaum wegen Schwunds nicht detektiert worden sein.
- Statistik des Empfangssignals:
   Bei einer ungestörten und unverzerrten GMSK erhält man noch vor der genauen Synchronisation eine konstante Hüllkurve. Additive und multiplikative Störungen führen hingegen zu Hüllkurvenschwankungen. Auch 8-PSK, welche bei EDGE (Enhanced Data Rates for GSM Evolution) für den C0-Träger erlaubt werden wird, hat eine charakteristische Statistik. Es lohnt sich insbesondere dann weiterzusuchen, wenn die Statistik des Empfangssignals stets der eines ungestörten oder nur linear verzerrten GSM-Signals nahe kommt.
- Feldstärke auf den Nachbarkanälen:
   Die Nutzung dieses Kriteriums setzt voraus, daß Feldstärkewerte von durchgeführten Messungen gespeichert werden und für die Abschätzung der Nachbarkanalinterferenz zur Verfügung stehen, solange sie hinreichend aktuell sind. Falls bereits Feldstärkemessungen von Nachbarkanälen des anvisierten Kanals vorliegen und auf mindestens einem Nachbarkanal die Feldstärke so viel höher als auf dem anvisierten Kanal ist, daß wegen Nachbarkanalinterferenz keine Aussicht besteht, ein gesuchtes Datenpaket zu delektieren, wird die Suche auf dem anvisierten Kanal nicht fortgesetzt.
- Dringlichkeit:
   Wenn sich die Notwendigkeit eines Handoffs von BS1 ins GSM-Netz abzeichnet, die MS jedoch noch keine GSM-Basisstation gefunden hat, lohnt es eher, auch bei geringer Chance weiterzusuchen, als wenn die Entdeckung einer weiteren GSM-Basisstation keinen akuten Vorteil bietet. Das Finden des Nachbarkanals ist um so dringender, je
   - eher ein Handover zu GSM zu erwarten ist
   - weniger Nachbarzellen gefunden wurden
   - schlechter die Empfangsbedingungen für die bereits gefundenen Nachbarzellen sind
   - intensiver bereits erfolglos nach einer guten Nachbarzelle gesucht wurde.
- Bisheriger Sucherfolg:
   Eine vollständige Suche lohnt eher, wenn auf dem anvisierten Kanal in der jüngeren Vergangenheit gar nicht oder nur unvollständig gesucht wurde, als wenn eine erfolglose vollständige Suche nur kurze Zeit zurückliegt.

Dazu kann die Steuereinheit in der ersten Basisstation BS1 oder die STE in der Mobilstation in Zusammenwirken mit der Basisstation BS1 in Abhängigkeit der Register- und/oder Speicherinhalte und/oder der Daten in den Speicherbausteinen/Speicherzellen anhand von mindestens einem Kriterium, welches vom Verhältnis zwischen Aufwand und Nutzen direkt oder indirekt abhängen kann, die maximale effektive Gesamtdauer der Unterbrechungsphasen gegenüber jener verkürzen, die bei optimalen und/oder guten Übertragungsverhältnissen zu einer gesicherten Detektion eines zu detektierenden Datenpaketes nötig wäre, oder bei jener belassen.

## Patentansprüche

1. Verfahren zur Datenübertragung in einem Mobilfunksystem, bei dem
- die Daten (d) strukturiert in Rahmen (1, 4a, 4b) von einer ersten Basisstation (BS1) zu einer Mobilstation (MS) übertragen werden,
- zumindest während bestimmter Sendephasen Unterbrechungsphasen (2) eingelegt werden, in denen die erste Basisstation (BS1) das Senden unterbricht und die Mobilstation (MS) das Empfangen der von der ersten Basisstation (BS1) gesendeten Daten und/oder das Verarbeiten empfangener Daten (d) unterbricht, und in denen die Mobilstation (MS) auf den Empfang zu detektierender Datenpakete (dp), die periodisch von einer zweiten Basisstation (BS2) gesendet werden, geschaltet wird,
**dadurch gekennzeichnet, dass**
- in Abhängigkeit von der Feldstärke einer abzusuchenden Frequenz,
und/oder in Abhängigkeit von einer Statistik des Empfangssignals,
und/oder in Abhängigkeit von einer Feldstärke auf Nachbarkanälen,
und/oder in Abhängigkeit von einer Dringlichkeit einer Suche, und/oder in Abhängigkeit vom Ergebnis zuvor ausgeführter Suchen,
und/oder in Abhängigkeit von Informationen über die Erfolgsaussichten einer Suche nach zu detektierenden Datenpaketen,
und/oder in Abhängigkeit von Informationen über die Abhängigkeit der Erfolgsaussichten einer Suche nach zu detektierenden Datenpaketen
von der maximalen effektiven Gesamtdauer der Unterbrechungsphasen
die maximale effektive Gesamtdauer der Unterbrechungsphasen variiert wird.

2. Verfahren nach Anspruch 1, bei dem
- die Mobilstation (MS) in den Unterbrechungsphasen auch auf den Empfang charakteristischer Datenpakete (dp), die periodisch von einer zweiten Basisstation (BS2) gesendet werden, geschaltet wird, und
- auch in Abhängigkeit von mindestens einem Kriterium, das vom Verhältnis zwischen Aufwand und Nutzen abhängt und/oder in Abhängigkeit von Informationen über die Erfolgsaussichten einer Suche nach charakteristischen Datenpaketen und/oder in Abhängigkeit von Informationen über die Abhängigkeit der Erfolgsaussichten einer Suche nach charakteristischen Datenpaketen von der maximalen effektiven Gesamtdauer der Unterbrechungsphasen die maximale effektive Gesamtdauer der Unterbrechungsphasen variiert wird.

3. Verfahren nach einem der vorhergehenden Ansprüche, bei dem
- zu einer gesicherten Detektion eines zu detektierenden Datenpaketes Unterbrechungsphasen mit einer effektiven Gesamtdauer von maximal 11 Beobachtungsrahmen nötig wären, und
- stets oder in Abhängigkeit von mindestens einem Kriterium, das vom Verhältnis zwischen Aufwand und Nutzen abhängt und/oder in Abhängigkeit von Informationen über die Erfolgsaussichten einer Suche nach zu detektierenden und/oder charakteristischen Datenpaketen und/oder in Abhängigkeit von Informationen über die Abhängigkeit der Erfolgsaussichten einer Suche nach zu detektierenden und/oder charakteristischen Datenpaketen von der maximalen effektiven Gesamtdauer der Unterbrechungsphasen Unterbrechungsphasen mit einer effektiven Gesamtdauer von maximal 10 Beobachtungsrahmen eingelegt werden.

4. Verfahren nach einem der vorhergehenden Ansprüche, bei dem
- zu einer gesicherten Detektion eines zu detektierenden Datenpaketes Unterbrechungsphasen mit einer effektiven Gesamtdauer von maximal 11 Beobachtungsrahmen nötig wären, und
- stets oder in Abhängigkeit von mindestens einem Kriterium, das vom Verhältnis zwischen Aufwand und Nutzen abhängt und/oder in Abhängigkeit von Informationen über die Erfolgsaussichten einer Suche nach zu detektierenden und/oder charakteristischen Datenpaketen und/oder in Abhängigkeit von Informationen über die Abhängigkeit der Erfolgsaussichten einer Suche nach zu detektierenden und/oder charakteristischen Datenpaketen von der maximalen effektiven Gesamtdauer der Unterbrechungsphasen Unterbrechungsphasen mit einer effektiven Gesamtdauer von maximal 9 Beobachtungsrahmen eingelegt werden.

5. Verfahren nach einem der vorhergehenden Ansprüche, bei dem
- die zweite Basisstation (BS2) gemäß dem GSM-Standard oder einem davon abgeleiteten Standard funktioniert, zu detektierende Datenpakete von einer zweiten Basisstation (BS2) innerhalb von GSM-Rahmen übertragen werden, und zwischen dem Beginn einer ersten Unterbrechungsphase und einer zweiten Unterbrechungsphase eine Dauer von 52 GSM-Rahmen liegt.

6. Verfahren nach einem der Ansprüche 1 bis 4, bei dem die zweite Basisstation (BS2) gemäß dem GSM-Standard oder einem davon abgeleiteten Standard funktioniert, zu detektierende Datenpakete von einer zweiten Basisstation (BS2) innerhalb von GSM-Rahmen übertragen werden, und zwischen dem Beginn einer ersten Unterbrechungsphase und einer zweiten Unterbrechungsphase eine Dauer von 26 GSM-Rahmen liegt.

7. Verfahren nach einem der Ansprüche 1 bis 4, bei dem die zweite Basisstation (BS2) gemäß dem GSM-Standard oder einem davon abgeleiteten Standard funktioniert,
zu detektierende Datenpakete von einer zweiten Basisstation (BS2) innerhalb von GSM-Rahmen übertragen werden,
zwischen dem Beginn einer ersten Unterbrechungsphase und einer zweiten Unterbrechungsphase eine Dauer von n1 GSM-Rahmen liegt, und
zwischen dem Beginn einer zweiten Unterbrechungsphase und einer dritten Unterbrechungsphase eine Dauer von n2 GSM-Rahmen liegt.

8. Verfahren nach einem der vorhergehenden Ansprüche, bei dem die Mobilstation (MS) nach dem Empfang eines charakteristischen Datenpaketes und/oder eines zu detektierenden Datenpaketes einer zweiten Basisstation (BS2) und/oder in Abhängigkeit von mindestens einem Kriterium, das vom Verhältnis zwischen Aufwand und Nutzen abhängt und/oder bei Erfüllung von aus dem bisherigen Empfangssignal abgeleiteten Bedingungen Informationen zur Beeinflussung des Einlegens weiterer Unterbrechungsphasen an die erste Basisstation (BS1) übermittelt.

9. Verfahren nach einem der vorhergehenden Ansprüche, bei dem 11 Beobachtungsrahmen nach konventionellem Suchverfahren durch 6 Beobachtungsrahmen mit kombiniertem Suchverfahren nach charakteristischen und zu detektierenden Datenpaketen ersetzt werden, und stets oder in Abhängigkeit von mindestens einem Kriterium, das vom Verhältnis zwischen Aufwand und Nutzen abhängt oder bei Erfüllung von Bedingungen, die sich an der Aufwand-Nutzen-Relation orientieren, weniger als 6 Beobachtungsrahmen verwendet werden.

10. Verfahren nach einem der vorhergehenden Ansprüche, bei dem
die Anzahl der bereits gefundenen Nachbarbasisstationen zur Entscheidung über eine verkürzte Suche herangezogen wird.

11. Verfahren nach einem der vorhergehenden Ansprüche, bei dem die Übertragungsqualität bei den bereits gefundenen Nachbarbasisstationen im Downlink und/oder Uplink zur Entscheidung über eine verkürzte Suche herangezogen werden.

12. Verfahren nach einem der vorhergehenden Ansprüche, bei dem
die Feldstärke und/oder ihre Schwankungen auf der anvisierten Frequenz zur Entscheidung über eine verkürzte Suche herangezogen werden.

13. Verfahren nach einem der vorhergehenden Ansprüche, bei dem
die Statistik des Signalzeigers des Empfangssignals und/oder von ihm abgeleitete Größen zur Entscheidung über eine verkürzte Suche herangezogen werden.

14. Verfahren nach einem der vorhergehenden Ansprüche, bei dem
die Feldstärke auf im Frequenzbereich benachbarten Kanälen zur Entscheidung über eine verkürzte Suche herangezogen wird.

15. Verfahren nach einem der vorhergehenden Ansprüche, bei dem das Empfangsspektrum vor, zwischen oder hinter Filterstufen und/oder davon abgeleitete Größen zur Entscheidung über eine verkürzte Suche herangezogen werden.

16. Verfahren nach einem der vorhergehenden Ansprüche, bei dem
die Intensität und/oder das zeitliche Zurückliegen der bisherigen Suche auf Sendefrequenzen anderer Basisstationen als der gerade anvisierten zur Entscheidung über eine verkürzte Suche herangezogen wird.

17. Verfahren nach einem der vorhergehenden Ansprüche, bei dem
die Intensität und/oder das zeitliche Zurückliegen der bisherigen Suche auf der gleichen Frequenz zur Entscheidung über eine verkürzte Suche herangezogen wird.

18. Mobilstation (MS) mit
Mitteln (EE) zum Empfang von Daten, die in Rahmen strukturiert von einer ersten Basisstation (BS1) gesendet werden, Mitteln (STE) zum Einlegen von Unterbrechungs- und/oder Umschaltphasen zumindest während bestimmter Empfangsphasen, in denen das Empfangen umgeschaltet oder unterbrochen und/oder das Verarbeiten empfangener Daten unterbrochen wird,
Mitteln (STE) zum Schalten auf den Empfang zu detektierender Datenpakete, die von einer zweiten Basisstation (BS2) gesendet werden,
**dadurch gekennzeichnet, dass**
Mitteln vorhanden sind, so daß
- in Abhängigkeit von der Feldstärke einer abzusuchenden Frequenz,
und/oder in Abhängigkeit von einer Statistik des Empfangssignals,
und/oder in Abhängigkeit von einer Feldstärke auf Nachbarkanälen,
und/oder in Abhängigkeit von einer Dringlichkeit einer Suche, und/oder in Abhängigkeit vom Ergebnis zuvor ausgeführter Suchen,
und/oder in Abhängigkeit von Informationen über die Erfolgsaussichten einer Suche nach zu detektierenden Datenpaketen,
und/oder in Abhängigkeit von Informationen über die Abhängigkeit der Erfolgsaussichten einer Suche nach zu detektierenden Datenpaketen
von der maximalen effektiven Gesamtdauer der Unterbrechungsphasen
die maximale effektive Gesamtdauer der Unterbrechungsphasen variiert wird.

19. Mobilstation (MS) nach Anspruch 18, bei der
zu einer gesicherten Detektion eines zu detektierenden Datenpaketes Unterbrechungsphasen mit einer effektiven Gesamtdauer von maximal 11 Beobachtungsrahmen nötig wären, und Unterbrechungsphasen mit einer effektiven Gesamtdauer von maximal 10 Beobachtungsrahmen eingelegt werden.

20. Mobilstation (MS) nach Anspruch 18, bei der
zu einer gesicherten Detektion eines zu detektierenden Datenpaketes Unterbrechungsphasen mit einer effektiven Gesamtdauer von maximal 11 Beobachtungsrahmen nötig wären, und Unterbrechungsphasen mit einer effektiven Gesamtdauer von maximal 9 Beobachtungsrahmen eingelegt werden.

21. Mobilstation (MS) nach Anspruch 18, bei der
zu einer gesicherten Detektion eines zu detektierenden Datenpaketes Unterbrechungsphasen mit einer effektiven Gesamtdauer von maximal 11 Beobachtungsrahmen nötig wären, und
die Steuereinrichtung (STE) anhand von mindestens einem Kriterium, das vom Verhältnis zwischen Aufwand und Nutzen abhängt entscheidet, ob die effektive Gesamtdauer der Unterbrechungsphasen auf maximal 10 Beobachtungsrahmen beschränkt wird.

22. Mobilstation (MS) nach Anspruch 18, bei der
zu einer gesicherten Detektion eines zu detektierenden Datenpaketes Unterbrechungsphasen mit einer effektiven Gesamtdauer von maximal 11 Beobachtungsrahmen nötig wären, und
die Steuereinrichtung (STE) anhand von mindestens einem Kriterium, das vom Verhältnis zwischen Aufwand und Nutzen abhängt entscheidet, ob die effektive Gesamtdauer der Unterbrechungsphasen auf maximal 9 Beobachtungsrahmen beschränkt wird.

23. Mobilstation (MS) nach einem der Ansprüche 18 bis 22, welche die für die weitere Nachbarzellsuche relevanten gemessenen Feldstärken in Speichereinrichtungen (SPE) speichert und durch ein Nachbarzellsuch- und/oder - beobachtungsverfahren ausreichende Aktualität der Werte gewährleistet oder zu den gespeicherten Werten ermitteln kann, ob ihre Messung zu lange zurückliegt, um auf ihrer Grundlage entscheiden zu können

24. Mobilstation (MS) nach einem der Ansprüche 18 bis 23, welche
statistische Werte des Empfangssignals, beispielsweise von der Feldstärke und/oder Amplitude und/oder vom Betrag des komplexwertigen Basisbandsignals vor und/oder nach der Kanalentzerrung, oder davon abgeleitete Größen genau genug mißt und/oder berechnet, um **dadurch** auf multiplikative und/oder additive Störung schließen zu können.

25. Mobilstation (MS) nach einem der Ansprüche 18 bis 24, welche den Bedarf an einem Handoff zu einem anderen Standard abschätzt und/oder die Quantität und/oder Qualität der bereits gefundenen Nachbarbasisstationen (BS2,BS3) mit oder ohne Berücksichtigung der Intensität der bereits vorgenommenen Suche mit oder ohne Berücksichtigung der jeweils seitdem verstrichenen Zeit bewertet.

26. Mobilstation (MS) nach einem der Ansprüche 18 bis 25, welche zu Beginn der Suche und/oder nur wenige Male und/oder in größeren Zeitintervallen maximal über die effektive Gesamtdauer der Unterbrechungsphasen sucht, die bei optimalen Übertragungsverhältnissen zu einer gesicherten Detektion eines zu detektierenden Datenpaketes nötig wäre, und bei der ansonsten Unterbrechungsphasen mit einer kürzeren effektiven Gesamtdauer eingelegt werden.

27. Mobilstation (MS) nach einem der Ansprüche 18 bis 26, welche zu Beginn der Suche und/oder nur wenige Male und/oder in größeren Zeitintervallen maximal über 11 Beobachtungsrahmen sucht und bei der ansonsten Unterbrechungsphasen mit einer effektiven Gesamtdauer von maximal 9 Beobachtungsrahmen eingelegt werden.

28. Mobilstation (MS) nach einem der Ansprüche 18 bis 27, welche zu Beginn der Suche und/oder nur wenige Male und/oder in größeren Zeitintervallen maximal über 11 Beobachtungsrahmen sucht und bei der ansonsten Unterbrechungsphasen mit einer effektiven Gesamtdauer von maximal 10 Beobachtungsrahmen eingelegt werden.

29. Mobilstation (MS) nach einem der Ansprüche 18 bis 28, bei der zwischen dem Beginn einer ersten Unterbrechungsphase und einer zweiten Unterbrechungsphase eine Dauer von 52 GSM-Rahmen liegt.

30. Mobilstation (MS) nach einem der Ansprüche 18 bis 28, bei der
zwischen dem Beginn einer ersten Unterbrechungsphase und einer zweiten Unterbrechungsphase eine Dauer von n1 GSM-Rahmen liegt, und
zwischen dem Beginn einer zweiten Unterbrechungsphase und einer dritten Unterbrechungsphase eine Dauer von n2 GSM-Rahmen liegt.

31. Mobilstation (MS) nach einem der Ansprüche 18 bis 30, mit Mitteln (SE) zum Senden von Informationen zur ersten Basisstation, die das Einlegen weiterer Unterbrechungsphasen beeinflussen.

32. Basisstation (BS1) mit
Mitteln zum Senden von in Rahmen (1, 4a, 4b) strukturierten Daten zu einer Mobilstation (MS),
Mitteln zum Einlegen von Unterbrechungsphasen zumindest während bestimmter Sendephasen (2),
**dadurch gekennzeichnet, dass**
Mitteln vorhanden sind, so daß
- in Abhängigkeit von der Feldstärke einer abzusuchenden Frequenz,
und/oder in Abhängigkeit von einer Statistik des Empfangssignals,
und/oder in Abhängigkeit von einer Feldstärke auf Nachbarkanälen,
und/oder in Abhängigkeit von einer Dringlichkeit einer Suche, und/oder in Abhängigkeit vom Ergebnis zuvor ausgeführter Suchen,
und/oder in Abhängigkeit von Informationen über die Erfolgsaussichten einer Suche nach zu detektierenden Datenpaketen,
und/oder in Abhängigkeit von Informationen über die Abhängigkeit der Erfolgsaussichten einer Suche nach zu detektierenden Datenpaketen
von der maximalen effektiven Gesamtdauer der Unterbrechungsphasen
die maximale effektive Gesamtdauer der Unterbrechungsphasen variiert wird.

33. Basisstation (BS1) nach Anspruch 32 mit
einer Steuereinrichtung, die alleine oder mittels Datenübertragung über die Luftschnittstelle mit Unterstützung der Mobiistation (MS) anhand von mindestens einem Kriterium, das vom Verhältnis zwischen Aufwand und Nutzen abhängt, entscheidet oder die Entscheidung der Mobilstation (MS) übernimmt, ob die eine Verkürzung der Suche durchgeführt wird.

34. Basisstation (BS1) nach einem der Ansprüche 32 bis 33, wobei
Unterbrechungsphasen mit einer effektiven Gesamtdauer von maximal 10 Beobachtungsrahmen eingelegt werden.

35. Basisstation (BS1) nach einem der Ansprüche 32 bis 34, wobei
die Steuereinrichtung der Basisstation BS1 alleine oder mittels Datenübertragung über die Luftschnittstelle mit Unterstützung der Mobilstation (MS) anhand von mindestens einem Kriterium, das vom Verhältnis zwischen Aufwand und Nutzen abhängt, entscheidet oder die Entscheidung der Mobilstation (MS) übernimmt, ob die effektive Gesamtdauer der Unterbrechungsphasen auf maximal 10 Beobachtungsrahmen beschränkt wird.

36. Basisstation (BS1) nach einem der Ansprüche 32 bis 35, wobei
die Steuereinrichtung der Basisstation (BS) alleine oder mittels Datenübertragung über die Luftschnittstelle mit Unterstützung der Mobilstation (MS) anhand von mindestens einem Kriterium, das vom Verhältnis zwischen Aufwand und Nutzen abhängt, entscheidet oder die Entscheidung der Mobilstation (MS) übernimmt, ob die effektive Gesamtdauer der Unterbrechungsphasen auf maximal 9 Beobachtungsrahmen beschränkt wird.

37. Basisstation (BS1) nach einem der Ansprüche 32 bis 36, wobei
zu einer gesicherten Detektion eines zu detektierenden Datenpaketes Unterbrechungsphasen mit einer effektiven Gesamtdauer von maximal 11 Beobachtungsrahmen nötig wären, und Unterbrechungsphasen mit einer effektiven Gesamtdauer von maximal 9 Beobachtungsrahmen eingelegt werden.

38. Basisstation (BS1) nach einem der Ansprüche 32 bis 37, wobei die zweite Basisstation (BS2) gemäß dem GSM-Standard oder einem davon abgeleiteten Standard funktioniert, zu detektierende Datenpakete innerhalb von GSM-Rahmen übertragen werden, und
zwischen dem Beginn einer ersten Unterbrechungsphase und einer zweiten Unterbrechungsphase eine Dauer von 52 GSM-Rahmen liegt.

39. Basisstation (BS1) nach einem der Ansprüche 32 bis 37, wobei die zweite Basisstation (BS2) gemäß dem GSM-Standard oder einem davon abgeleiteten Standard funktioniert, zu detektierende Datenpakete innerhalb von GSM-Rahmen übertragen werden, und
zwischen dem Beginn einer ersten Unterbrechungsphase und einer zweiten Unterbrechungsphase eine Dauer von 26 GSM-Rahmen liegt.

40. Basisstation (BS1) nach einem der Ansprüche 32 bis 37, die zweite Basisstation (BS2) gemäß dem GSM-Standard oder einem davon abgeleiteten Standard funktioniert,
zu detektierende Datenpakete innerhalb von GSM-Rahmen übertragen werden,
zwischen dem Beginn einer ersten Unterbrechungsphase und einer zweiten Unterbrechungsphase eine Dauer von n1 GSM-Rahmen liegt, und
zwischen dem Beginn einer zweiten Unterbrechungsphase und einer dritten Unterbrechungsphase eine Dauer von n2 GSM-Rahmen liegt.

41. Basisstation (BS1) nach einem der Ansprüche 32 bis 40, mit
Mitteln zum Empfang von Informationen, die das Einlegen von Unterbrechungsphasen beeinflussen, und
Mitteln zur Beeinflussung des Einlegens von Unterbrechungsphasen in Abhängigkeit von dem Empfangsergebnis.

42. Basisstation (BS1) nach einem der Ansprüche 32 bis 41, wobei 11 Beobachtungsrahmen nach konventionellem Suchverfahren durch 6 Beobachtungsrahmen mit kombiniertem Suchverfahren nach charakteristischen und zu detektierenden Datenpaketen ersetzt werden, und stets oder in Abhängigkeit von mindestens einem Kriterium, das vom Verhältnis zwischen Aufwand und Nutzen abhängt oder bei Erfüllung von Bedingungen, die sich an der Aufwand-Nutzen-Relation orientieren, weniger als 6 Beobachtungsrahmen verwendet werden.

43. Mobilstation (MS) nach einem der Ansprüche 18 bis 31, wobei 11 Beobachtungsrahmen nach konventionellem Suchverfahren durch 6 Beobachtungsrahmen mit kombiniertem Suchverfahren nach charakteristischen und zu detektierenden Datenpaketen ersetzt werden, und stets oder in Abhängigkeit von mindestens einem Kriterium, das vom Verhältnis zwischen Aufwand und Nutzen abhängt oder bei Erfüllung von Bedingungen, die sich an der Aufwand-Nutzen-Relation orientieren, weniger als 6 Beobachtungsrahmen verwendet werden.

## Revendications

1. Procédé pour la transmission de données dans un système
radio mobile, dans lequel
- les données (d) sont transmises de façon structurée dans des trames (1, 4a, 4b) d'une première station de base (BS1) à une station mobile (MS),
- on insère au moins pendant certaines phases d'émission des phases d'interruption (2), au cours desquelles la première station de base (BS1) interrompt l'émission et la station mobile (MS) interrompt la réception des données envoyées par la première station de base (BS1) et/ou le traitement de données (d) reçues, et au cours desquelles la station mobile (MS) est commutée sur la réception de paquets de données (dp) à détecter, qui sont envoyés périodiquement par une seconde station de base (BS2), **caractérisé en ce que**
- la durée globale effective maximale des phases d'interruption est variée
- en fonction de l'intensité de champ d'une fréquence de recherche,
et/ou en fonction d'une statistique du signal d'émission,
et/ou en fonction d'une intensité de champ sur des canaux voisins,
et/ou en fonction d'une urgence d'une recherche,
et/ou en fonction du résultat de recherches effectuées auparavant,
et/ou en fonction d'informations relatives aux chances de réussite d'une recherche de paquets de données à détecter,
et/ou en fonction d'informations relatives à la dépendance des chances de réussite d'une recherche de paquets à détecter
par rapport à la durée globale effective maximale des phases d'interruption.

2. Procédé selon la revendication 1, dans lequel
- la station mobile (MS) est commutée dans les phases d'interruption également sur la réception de paquets de données (dp) caractéristiques qui sont envoyés périodiquement par une seconde station de base (BS2), et
- la durée globale effective maximale des phases d'interruption est variée également en fonction d'au moins un critère, qui dépend du rapport entre les moyens engagés et l'avantage obtenu et/ou en fonction des informations relatives aux chances de réussite d'une recherche de paquets de données caractéristiques et/ou en fonction d'informations relatives à la dépendance des chances de réussite d'une recherche de paquets de données caractéristiques par rapport à la durée globale effective maximale des phases d'interruption.

3. Procédé selon l'une quelconque des revendications précédentes, dans lequel
- pour une détection sécurisée d'un paquet de données à détecter, on aurait besoin des phases d'interruption avec une durée effective globale d'au maximum 11 trames d'observation, et
- des phases d'interruption avec une durée globale effective d'au maximum 10 trames d'observation sont insérées toujours ou en fonction d'au moins un critère, qui dépend du rapport entre les moyens engagés et l'avantage obtenu et/ou en fonction d'informations relatives aux chances de réussite d'une recherche de paquets de données à détecter et/ou de paquets de données caractéristiques et/ou en fonction d'informations relatives à la dépendance des chances de réussite d'une recherche de paquets de données à détecter et/ou de paquets de données caractéristiques par rapport à la durée globale effective maximale des phases d'interruption.

4. Procédé selon l'une quelconque des revendications précédentes, dans lequel
- pour une détection sécurisée d'un paquet de données à détecter, il faudrait des phases d'interruption avec une durée globale effective de maximum 11 trames d'observation, et
- des phases d'interruption avec une durée globale effective d'au maximum 9 trames d'observation sont insérées toujours ou en fonction d'au moins un critère qui dépend du rapport entre les moyens engagés et l'avantage obtenu et/ou en fonction d'informations relatives aux chances de réussite d'une recherche de paquets de données à détecter et/ou de paquets de données caractéristiques et/ou en fonction d'informations relatives à la dépendance entre les chances de réussite d'une recherche de paquets de données à détecter et/ou de paquets de données caractéristiques par rapport à la durée globale effective maximale des phases d'interruption.

5. Procédé selon l'une quelconque des revendications précédentes, dans lequel
- la seconde station de base (BS2) fonctionne selon un standard GSM ou un standard déduit de celui-ci,
- des paquets de données à détecter sont transmis par une seconde station de base (BS2) à l'intérieur de trames GSM, et une durée de 52 trames GSM se situe entre le début d'une première phase d'interruption et une seconde phase d'interruption.

6. Procédé selon l'une quelconque des revendications 1 à 4, dans lequel la seconde station de base (BS2) fonctionne selon le standard GSM ou un standard déduit de celui-ci,
des paquets de données à détecter sont transmis par une seconde station de base (BS2) à l'intérieur de trames GSM, et
une durée de 26 trames GSM se situe entre le début d'une première phase d'interruption et une seconde phase d'interruption.

7. Procédé selon l'une quelconque des revendications 1 à 4, dans lequel
la seconde station de base (BS2) fonctionne selon le standard GSM ou un standard déduit de celui-ci,
des paquets de données à détecter sont transmis par une seconde station de base (BS2) à l'intérieur de trames GSM,
une durée de n1 trames GSM se situe entre le début d'une première phase d'interruption et une seconde phase d'interruption, et
une durée de n2 trames GSM se situe entre le début d'une seconde phase d'interruption et une troisième phase d'interruption.

8. Procédé selon l'une quelconque des revendications précédentes, dans lequel la station mobile (MS) transmet des informations pour influencer l'insertion d'autres phases d'interruption à la première station de base (BS1) après la réception d'un paquet de données caractéristique et/ou d'un paquet de données à détecter d'une seconde station de base (BS2) et/ou en fonction d'au moins un critère, qui dépend du rapport entre les moyens engagés et l'avantage obtenu et/ou en cas de réalisation de conditions déduites du signal de réception existant jusqu'à présent.

9. Procédé selon l'une quelconque des revendications précédentes, dans lequel 11 trames d'observation selon un procédé de recherche classique sont remplacées par 6 trames d'observation avec un procédé de recherche combiné de paquets de données caractéristiques et à détecter, et moins de 6 trames d'observation sont utilisées toujours ou en fonction d'au moins un critère, qui dépend du rapport entre les moyens engagés et l'avantage obtenu ou en cas de réalisation de conditions qui sont axées sur la relation moyens engagés - avantage.

10. Procédé selon l'une quelconque des revendications précédentes, dans lequel
le nombre des stations de base voisines déjà trouvées est utilisé pour la décision concernant une recherche raccourcie.

11. Procédé selon l'une quelconque des revendications précédentes, dans lequel la qualité de transmission est utilisée sur les stations de base voisines déjà trouvées dans la liaison descendante et/ou la liaison ascendante pour la décision concernant une recherche raccourcie.

12. Procédé selon l'une quelconque des revendications précédentes, dans lequel
l'intensité de champ et/ou ses fluctuations sur la fréquence concernée sont utilisées pour prendre une décision concernant une recherche raccourcie.

13. Procédé selon l'une quelconque des revendications précédentes, dans lequel
la statistique du phaseur de signal du signal de réception et/ou des grandeurs déduites de celui-ci sont utilisées pour prendre une décision concernant une recherche raccourcie.

14. Procédé selon l'une quelconque des revendications précédentes, dans lequel
l'intensité de champ sur des canaux voisins dans la plage de fréquence est utilisée pour prendre une décision concernant une recherche raccourcie.

15. Procédé selon l'une quelconque des revendications précédentes, dans lequel le spectre de réception situé avant, entre ou derrière des étages de filtre et/ou des grandeurs déduites de celui-ci sont utilisés pour prendre une décision concernant une recherche raccourcie.

16. Procédé selon l'une quelconque des revendications précédentes, dans lequel l'intensité et/ou l'ancienneté dans le temps de la recherche existant jusqu'à présent sur des fréquences d'émission d'autres stations de base que celles précisément concernées est utilisée pour prendre une décision concernant une recherche raccourcie.

17. Procédé selon l'une quelconque des revendications précédentes, dans lequel l'intensité et/ou l'ancienneté dans le temps de la recherche existant jusqu'à présent sur la même fréquence est utilisée pour prendre une décision concernant une recherche raccourcie.

18. Station mobile (MS) comprenant
des moyens (EE) pour la réception de données, qui sont envoyées de façon structurée dans des trames par une première station de base (BS1),
des moyens (STE) pour l'insertion de phases d'interruption et/ou de phases de commutation au moins pendant certaines phases de réception, au cours desquelles la réception est commutée ou interrompue et/ou le traitement de données reçues est interrompu,
des moyens (STE) pour la commutation sur la réception de paquets de données à détecter, qui sont envoyés par une seconde station de base (BS2),
**caractérisée en ce que** des moyens sont présents, de sorte que la durée globale effective maximale des phases d'interruption est variée
- en fonction de l'intensité de champ d'une fréquence de recherche,
et/ou en fonction d'une statistique du signal de réception,
et/ou en fonction d'une intensité de champ sur des canaux voisins,
et/ou en fonction d'une urgence d'une recherche,
et/ou en fonction du résultat de recherches effectuées auparavant,
et/ou en fonction d'informations relatives aux chances de réussite d'une recherche de paquets de données à détecter,
et/ou en fonction d'informations relatives à la dépendance des chances de réussite d'une recherche de paquets de données à détecter
par rapport à la durée globale effective maximale des phases d'interruption.

19. Station mobile (MS) selon la revendication 18, sur laquelle
des phases d'interruption avec une durée globale effective d'au maximum 11 trames d'observation seraient nécessaires pour une détection sécurisée d'un paquet de données à détecter, et des phases d'interruption avec une durée globale effective d'au maximum 10 trames d'observation sont insérées.

20. Station mobile (MS) selon la revendication 18, sur laquelle
des phases d'interruption avec une durée globale effective d'au maximum 11 trames d'observation seraient nécessaires pour une détection sécurisée d'un paquet de données à détecter, et des phases d'interruption avec une durée globale effective d'au maximum 9 trames d'observation sont insérées.

21. Station mobile (MS) selon la revendication 18, sur laquelle
des phases d'interruption avec une durée globale effective d'au maximum 11 trames d'observation seraient nécessaires pour une détection sécurisée d'un paquet de données à détecter, et le dispositif de commande (STE) décide à l'aide d'au moins un critère, qui dépend du rapport entre les moyens engagés et l'avantage obtenu, si la durée globale effective des phases d'interruption est limitée à au maximum 10 trames d'observation.

22. Station mobile (MS) selon la revendication 18, sur laquelle
des phases d'interruption avec une durée globale effective d'au maximum 11 trames d'observation seraient nécessaires pour une détection sécurisée d'un paquet de données à détecter, et le dispositif de commande (STE) décide à l'aide d'au moins un critère, qui dépend du rapport entre les moyens engagés et l'avantage obtenu, si la durée globale effective des phases d'interruption est limitée à au maximum 9 trames d'observation.

23. Station mobile (MS) selon l'une quelconque des revendications 18 à 22, qui mémorise les intensités de champ mesurées, importantes pour la recherche suivante de cellule voisine, dans des dispositifs de stockage (SPE) et garantit une actualité suffisante des valeurs par un procédé de recherche de cellule voisine et/ou un procédé d'observation de cellule voisine ou peut déterminer en ce qui concerne les valeurs mémorisées si leur mesure remonte à trop longtemps pour pouvoir prendre une décision sur sa base.

24. Station mobile (MS) selon l'une quelconque des revendications 18 à 23, qui mesure et/ou calcule avec suffisamment de précision des valeurs statistiques du signal de réception, par exemple de l'intensité de champ et/ou de l'amplitude et/ou de la valeur du signal de bande de base à valeur complexe avant et/ou après la distorsion du canal ou des grandeurs déduites de ces valeurs, afin de pouvoir conclure ainsi à une perturbation multiplicative et/ou additive.

25. Station mobile (MS) selon l'une quelconque des revendications 18 à 24, qui évalue les besoins d'une "handoff" pour un autre standard et/ou évalue la quantité et/ou la qualité des stations de base voisines déjà trouvées (BS2, BS3) avec ou sans la prise en compte de l'intensité de la recherche déjà effectuée avec ou sans la prise en compte du temps respectivement écoulé depuis.

26. Station mobile (MS) selon l'une quelconque des revendications 18 à 25, qui recherche au début de la recherche et/ou seulement quelques fois et/ou à des intervalles de temps assez grands au maximum pendant la durée globale effective maximum des phases d'interruption qui serait nécessaire avec des conditions de transmission optimales pour une détection sécurisée d'un paquet de données à détecter et sur laquelle autrement des phases d'interruption avec une durée globale effective plus courte sont insérées.

27. Station mobile (MS) selon l'une quelconque des revendications 18 à 26, qui recherche au début de la recherche et/ou seulement quelques fois et/ou à des intervalles de temps assez grands au maximum pendant 11 trames d'observation et sur laquelle autrement des phases d'interruption avec une durée globale effective d'au maximum 9 trames d'observation sont insérées.

28. Station mobile (MS) selon l'une quelconque des revendications 18 à 27, qui recherche au début de la recherche et/ou seulement quelques fois et/ou à des intervalles de temps assez grands au maximum pendant 11 trames d'observation et sur laquelle autrement des phases d'interruption avec une durée globale effective d'au maximum 10 trames d'observation sont insérées.

29. Station mobile (MS) selon l'une quelconque des revendications 18 à 28, sur laquelle une durée de 52 trames GSM se situe entre le début d'une première phase d'interruption et une seconde phase d'interruption.

30. Station mobile (MS) selon l'une quelconque des revendications 18 à 28, sur laquelle
une durée de n1 trames GSM se situe entre le début d'une première phase d'interruption et une seconde phase d'interruption, et
une durée de n2 trames GSM se situe entre le début d'une seconde phase d'interruption et une troisième phase d'interruption.

31. Station mobile (MS) selon l'une quelconque des revendications 18 à 30, avec des moyens (SE) pour l'envoi d'informations à la première station de base, qui influencent l'insertion d'autres phases d'interruption.

32. Station de base (BS1) avec
des moyens pour l'envoi de données structurées en trames (1, 4a, 4b) à une station mobile (MS),
des moyens pour l'insertion de phases d'interruption au moins pendant certaines phases d'émission (2),
**caractérisée en ce que** des moyens sont présents, de sorte que la durée globale effective maximale des phases d'interruption est variée
- en fonction de l'intensité de champ d'une fréquence de recherche,
et/ou en fonction d'une statistique du signal de réception,
et/ou en fonction d'une intensité de champ sur des canaux voisins,
et/ou en fonction d'une urgence d'une recherche,
et/ou en fonction du résultat de recherches effectuées auparavant,
et/ou en fonction d'informations relatives aux chances de réussite d'une recherche de paquets de données à détecter,
et/ou en fonction d'informations relatives à la dépendance des chances de réussite d'une recherche de paquets à détecter
par rapport à la durée globale effective maximale des phases d'interruption.

33. Station de base (BS1) selon la revendication 32 avec
un dispositif de commande, qui décide seul ou au moyen d'une transmission de données par l'interface radio avec le soutien de la station mobile (MS) à l'aide d'au moins un critère, qui dépend du rapport entre les moyens engagés et l'avantage obtenu, ou bien reprend la décision de la station mobile (MS) d'effectuer un raccourcissement de la recherche.

34. Station de base (BS1) selon l'une quelconque des revendications 32 à 33, sur laquelle
des phases d'interruption avec une durée globale effective d'au maximum 10 trames d'observation sont insérées.

35. Station de base (BS1) selon l'une quelconque des revendications 32 à 34, sur laquelle
le dispositif de commande de la station de base (BS1) décide seul ou au moyen de la transmission de données par l'interface radio avec le soutien de la station mobile (MS) à l'aide d'au moins un critère, qui dépend du rapport entre les moyens engagés et l'avantage obtenu, ou bien reprend la décision de la station mobile (MS) de limiter la durée globale effective des phases d'interruption à au maximum 10 trames d'observation.

36. Station de base (BS1) selon l'une quelconque des revendications 32 à 35, sur laquelle
le dispositif de commande de la station de base (BS) décide seul ou au moyen de la transmission de données par l'interface radio avec le soutien de la station mobile (MS) à l'aide d'au moins un critère, qui dépend du rapport entre les moyens engagés et l'avantage obtenu, ou bien reprend la décision de la station mobile (MS) de limiter la durée globale effective des phases d'interruption à au maximum 9 trames d'observation.

37. Station de base (BS1) selon l'une quelconque des revendications 32 à 36,
sur laquelle des phases d'interruption avec une durée globale effective d'au maximum 11 trames d'observation seraient nécessaires pour une détection sécurisée d'un paquet de données à détecter et des phases d'interruption avec une durée globale effective d'au maximum 9 trames d'observation sont insérées.

38. Station de base (BS1) selon l'une quelconque des revendications 32 à 37,
la seconde station de base (BS2) fonctionnant selon le standard GSM ou un standard déduit de celui-ci,
des paquets de données à détecter étant transmis à l'intérieur de trames GSM, et
une durée de 52 trames GSM étant située entre le début d'une première phase d'interruption et une seconde phase d'interruption.

39. Station de base (BS1) selon l'une quelconque des revendications 32 à 37,
la seconde station de base (BS2) fonctionnant selon le standard GSM ou un standard déduit de celui-ci, des paquets de données à détecter étant transmis à l'intérieur de trames GSM, et une durée de 26 trames GSM se situant entre le début d'une première phase d'interruption et une seconde phase d'interruption.

40. Station de base (BS1) selon l'une quelconque des revendications 32 à 37,
la seconde station de base (BS2) fonctionnant selon le standard GSM ou un standard déduit de celui-ci,
des paquets de données à détecter étant transmis à l'intérieur de trames GSM,
une durée de n1 trames GSM se situant entre le début d'une première phase d'interruption et une seconde phase d'interruption, et
une durée de n2 trames GSM se situant entre le début d'une seconde phase d'interruption et une troisième phase d'interruption.

41. Station de base (BS1) selon l'une quelconque des revendications 32 à 40,
avec des moyens pour la réception d'informations qui influencent l'insertion de phases d'interruption, et
des moyens pour influencer l'insertion de phases d'interruption en fonction du résultat de la réception.

42. Station de base (BS1) selon l'une quelconque des revendications 32 à 41,
sur laquelle 11 trames d'observation selon le procédé de recherche classique sont remplacées par 6 trames d'observation avec un procédé de recherche combiné de paquets de données caractéristiques et de paquets de données à détecter, et moins de 6 trames d'observation sont utilisées toujours ou en fonction d'au moins un critère qui dépend du rapport entre les moyens engagés et l'avantage obtenu ou en cas de réalisation de conditions qui sont axées sur la relation moyens engagés - avantage.

43. Station mobile (MS) selon l'une quelconque des revendications 18 à 31, sur laquelle 11 trames d'observation selon le procédé de recherche classique sont remplacées par 6 trames d'observation avec un procédé de recherche combiné de paquets de données caractéristiques et de paquets de données à détecter, et moins de 6 trames d'observation sont utilisées toujours ou en fonction d'au moins un critère, qui dépend du rapport entre les moyens engagés et l'avantage obtenu ou en cas de réalisation de conditions qui sont axées sur la relation moyens engagés - avantage.

## Claims

1. Method for data transmission in a mobile radio system, in which
- the data (d) is transmitted structured in frames (1, 4a, 4b) from a first base station (BS1) to a mobile station (MS),
- interruption phases (2) are inserted at least during specific send phases, in which the first base station (BS1) interrupts transmission and the mobile station (MS) interrupts the reception of data sent by the first base station (BS1) and/or the processing of received data (d), and in which the mobile station (MS) is switched to receiving data packets (dp) to be detected, which are periodically sent from a second base station (BS2),
**characterized in that**
- depending on the field strength of a frequency to be sought, and/or in depending on statistics of the receive signal, and/or depending on a field strength on adjacent channels, and/or depending on a priority of a search, and/or depending on the result of searches conducted previously,
and/or depending on information about the prospects of success of a search for data packets to be detected,
and/or in depending on information about the dependency of the prospects of success of a search for data packets to be detected
of the maximum effective overall duration of the interruption phases
the maximum effective overall duration of the interruption phases is varied.

2. Method in accordance with claim 1, in which
- the mobile station (MS) is also switched in the interruption phases to receiving characteristic data packets (dp), which are periodically sent from a second base station (BS2), and
- also depending on at least one criterion, which is a function of the relationship between effort and benefit and/or depending on information about the prospects of success of a search for characteristic data packets and/or depending on information about the dependency of the prospects of success of a search for characteristic data packets of the maximum effective overall duration of the interruption phases, the maximum effective overall duration of the interruption phases is varied.

3. Method in accordance with one of the previous claims, in
which
- for a secure detection of a data packet to be detected interruption phases with an effective overall duration of a maximum 11 observation frames would be needed, and
- continuously or depending on at least one criterion, which depends on the relationship between effort and benefit and/or depending on information about the prospects of success of a search for data packets to be detected and/or characteristic data packets and/or depending on information about the dependency of the prospects of success of a search for data packets to be detected and/or characteristic data packets of the maximum effective overall duration of the interruption phases, interruption phases with an effective overall duration of a maximum of 10 observation frames is inserted.

4. Method in accordance with one of the previous claims, in
which
- for a secure detection of a data packet to be detected, interruption phases with an effective overall duration of a maximum 11 observation frames would be needed, and
- constantly or depending on at least one criterion, which depends on the relationship between effort and benefit and/or depending on information about the prospects of success of a search for data packets to be detected and/or characteristic data packets, and/or depending on information about the dependency of the prospects of success of a search for data packets to be detected and/or characteristic data packets on the maximum effective overall duration of the interruption phases, interruption phases with an effective overall duration of a maximum of 9 observation frames are inserted.

5. Method in accordance with one of the previous claims, in
which
- the second base station (BS2) functions in accordance with the GSM standard or a standard derived from it,
data packets to be detected are transmitted from a second base station (BS2) within GSM frames and a period of 52 GSM frames lies between the beginning of a first interruption phase and a second interruption phase.

6. Method in accordance with one of the claims 1 to 4, in
which
- the second base station (BS2) functions in accordance with the GSM standard or a standard derived from it,
data packets to be detected are transmitted from a second base station (BS2) within GSM frames and a period of 26 GSM frames lies between the beginning of a first interruption phase and a second interruption phase.

7. Method in accordance with one of the claims 1 to 4, in
which
- the second base station (BS2) functions in accordance with the GSM standard or a standard derived from it, data packets to be detected are transmitted from a second base station (BS2) within GSM frames,
a period of n1 GSM frames lies between the beginning of a first interruption phase and a second interruption phase, and a period of n2 GSM frames lies between the beginning of a second interruption phase and a third interruption phase.

8. Method in accordance with one of the previous claims, in which the mobile station (MS) after receiving a characteristic data packet and/or a data packet to be detected of a second base station (BS2) and/or depending on at least one criterion which depends on the relationship between effort and benefit and/or on fulfilment of conditions derived from the previous receive signal, transfers information for influencing the application of further interruption phases to the first base station (BS1) .

9. Method in accordance with one of the previous claims, in which 11 observation frames in accordance with conventional search method are replaced by 6 observation frames with a combined search method for characteristic data packets and data packets to be detected, and continuously or depending on at least one criterion which depends on the relationship between effort and benefit or on fulfilment of conditions which are oriented to the effort-benefit relationship, fewer than 6 observation frame are used.

10. Method in accordance with one of the previous claims, in which the number of adjacent base stations already found is employed to decide on an abbreviated search.

11. Method in accordance with one of the previous claims, in which the transmission quality for the adjacent base stations already found in the downlink and/or uplink are employed for deciding on an abbreviated search.

12. Method in accordance with one of the previous claims, in which
the field strength and/or its variations on the envisaged frequency are employed in the decision about an abbreviated search.

13. Method in accordance with one of the previous claims, in which
the statistics of the signal pointer of the receive signal and/or variables derived from it are employed in the decision about an abbreviated search.

14. Method in accordance with one of the previous claims, in which
the field strength on adjacent channels in the frequency range is employed in the decision about an abbreviated search.

15. Method in accordance with one of the previous claims, in which the receive spectrum before, between or after filter stages and/or variables derived from it is employed in the decision about an abbreviated search.

16. Method in accordance with one of the previous claims, in which
the intensity and/or the distance back in time of the previous search for send frequencies of base stations other than the one currently envisaged is employed in the decision about an abbreviated search.

17. Method in accordance with one of the previous claims, in which
the intensity and/or how the distance back in time of the previous search for the same frequency is employed in the decision about an abbreviated search.

18. Mobile station (MS) with
Means (EE) for receiving data which is sent structured in frames from a first base station (BS1), means (STE) for inserting interruption and/or switchover phases at least during specific receive phases, in which receiving is switched over or interrupted and/or the processing of received data is interrupted,
Means (STE) for switching to receiving data packets to be detected which are sent by a second base station (BS2),
**characterized in that** means are present, such that
- depending on the field strength of a frequency to be sought, and/or in depending on statistics of the receive signal, and/or depending on a field strength on adjacent channels, and/or depending on a priority of a search, and/or depending on the result of searches conducted previously, and/or depending on information about the prospects of success of a search for data packets to be detected,
and/or in depending on information about the dependency of the prospects of success of a search for data packets to be detected
on the maximum effective overall duration of the interruption phases
the maximum effective overall duration of the interruption phases is varied.

19. Mobile station (MS) in accordance with claim 18, in which for a secured detection of a data packet to be detected, interruption phases with an effective overall duration of a maximum of 11 observation frames would be needed, and interruption phases with an effective overall duration of a maximum 10 observation frames are inserted.

20. Mobile station (MS) in accordance with claim 18, in which for a secured detection of a data packet to be detected, interruption phases with an effective overall duration of a maximum of 11 observation frames would be needed, and interruption phases with an effective overall duration of a maximum 9 observation frames are inserted.

21. Mobile station (MS) in accordance with claim 18, in which for a secure detection of a data packet to be detected, interruption phases with an effective overall duration of a maximum 11 observation frames would be needed, and the control unit (STE) based on at least one criterion which depends on the relationship between effort and benefit, decides whether the effective overall duration of the interruption phases is limited to a maximum of 10 observation frames.

22. Mobile station (MS) in accordance with claim 18, in which for a secure detection of a data packet to be detected, interruption phases with an effective overall duration of a maximum 11 observation frames would be needed, and the control unit (STE) decides, on the basis of at least one criterion which depends on the relationship between effort and benefit, whether the effective overall duration of the interruption phases is limited to a maximum of 9 observation frames.

23. Mobile station (MS) in accordance with one of the claims 18 to 22, which stores the field strengths measured for the further search for adjacent cells in memory units (SPE) and through an adjacent cell search method and/or through an adjacent cell observation method guarantees sufficient currency of the values or can determine for the stored values, whether their measurement was too far back in time for a decision based on them.

24. Mobile station (MS) in accordance with one of the claims 18 to 23, which measures and/or calculates statistical values of the receive signal, for example of the field strength and/or amplitude and/or on the amount of the complex-value baseband signal before and/or after the channel equalization, or variables derived from it precisely enough in order to be able to draw conclusions about multiplicative and/or additive faults.

25. Mobile station (MS) in accordance with one of the claims 18 to 24, which estimates the demand for a handoff to another standard and/or assesses the quantity and/or quality of the adjacent base stations (BS2, BS3) already found with or without taking account of the intensity of the search already undertaken with or without taking account of the intervening period already elapsed.

26. Mobile station (MS) in accordance with one of the claims 18 to 25, which at the beginning of the search and/or only a few times and/or at longer intervals, searches over a maximum period of the effective overall duration of the interruption phases which would be needed with optimum transmission circumstances for secure detection of a data packet to be detected, and for which otherwise interruption phases with an abbreviated effective overall duration are inserted.

27. Mobile station (MS) in accordance with one of the claims 18 to 26, which at the beginning of the search and/or only a few times and/or at longer intervals searches over a maximum period of 11 observation frames and for which interruption phases with an effective overall duration of maximum 9 observation frames are otherwise inserted.

28. Mobile station (MS) in accordance with one of the claims 18 to 27, which at the beginning of the search and/or only a few times and/or at longer intervals searches over a maximum period of 11 observation frames, and for which interruption phases with an effective overall duration of maximum 10 observation frames are otherwise inserted.

29. Mobile station (MS) in accordance with one of the claims 18 to 28, for which a period of 52 GSM frames lies between the beginning of a first interruption phase and a second interruption phase.

30. Mobile station (MS) in accordance with one of the claims 18 to 28, for which a period of n1 GSM frames lies between the beginning of a first interruption phase and a second interruption phase, and a period of n2 GSM frames lies between the beginning of a second interruption phase and a third interruption phase.

31. Mobile station (MS) in accordance with one of the claims 18 to 30, with means (SE) for sending information to the first base station which influences the insertion of further interruption phases.

32. Base station (BS1) with
Means for sending data structured in frames (1, 4a, 4b) to a mobile station (MS) ,
Means for applying interruption phases at least during specific send phases (2),
**characterized in that** means are present, so that
- depending on the field strength of a frequency to be sought, and/or in depending on statistics of the receive signal, and/or depending on a field strength on adjacent channels, and/or depending on a priority of a search, and/or depending on the result of searches conducted previously,
and/or depending on information about the prospects of success of a search for data packets to be detected,
and/or in depending on information about the dependency of the prospects of success of a search for data packets to be detected
on the maximum effective overall duration of the interruption phases
the maximum effective overall duration of the interruption phases is varied.

33. Base station (BS1) in accordance with claim 32 with a control device, which decides, alone or by means of data transmission over the air interface with the support of the mobile station (MS) on the basis of at least one criterion which depends on the relationship between effort and benefit, or takes over the decision of the mobile station (MS) as to whether the search is to be shortened.

34. Base station (BS1) in accordance with one of the claims 32 to 33, with
interruption phases with an effective overall duration of maximum 10 observation frames being inserted.

35. Base station (BS1) in accordance with one of the claims 32 to 34, with
the control device of the base station BS1 alone or by means of data transmission over the air interface with the support of the mobile station (MS) decides on the basis of at least one criterion which depends on the relationship between effort and benefit, or takes over the decision of the mobile station (MS) as to whether the effective overall duration of the interruption phases is to be restricted to a maximum of 10 observation frames.

36. Base station (BS1) in accordance with one of the claims 32 to 35, with
the control device of the base station (BS) alone or by means of data transmission over the air interface with the support of the mobile station (MS) decides on the basis of at least one criterion which depends on the relationship between effort and benefit, or takes over the decision of the mobile station (MS) as to whether the effective overall duration of the interruption phases is to be restricted to a maximum of 9 observation frames.

37. Base station (BS1) in accordance with one of the claims 32 to 36, for which
for a secured detection of a data packet to be detected, interruption phases with an effective overall duration of a maximum of 11 observation frames would be needed, and interruption phases with an effective overall duration of a maximum 9 observation frames are inserted.

38. Base station (BS1) in accordance with one of the claims 32 to 37, with
the second base station (BS2) functioning in accordance with the GSM standard or a standard derived from it,
data packets to be detected being transmitted within GSM frames, and
a period of 52 GSM frames lying between the beginning of a first interruption phase and a second interruption phase.

39. Base station (BS1) in accordance with one of the claims 32 to 37, with the second base station (BS2) functioning in accordance with the GSM standard or with a standard derived from it, data packets to be detected being transmitted within GSM frames, and
a period of 26 GSM frames lying between the beginning of a first interruption phase and a second interruption phase.

40. Base station (BS1) in accordance with one of the claims 32 to 37, with the second base station (BS2) functioning in accordance with the GSM standard or with a standard derived from it
data packets to be detected being transmitted within GSM frames
a period of n1 GSM frames lying between the beginning of a first interruption phase and a second interruption phase, and a period of n2 GSM frames lying between the beginning of a second interruption phase and a third interruption phase.

41. Base station (BS1) in accordance with one of the claims 32 to 40, with
means for receiving information which influences the application of interruption phases, and
means for influencing the application of interruption phases depending on the receive result.

42. Base station (BS1) in accordance with one of the claims 32 to 41, with 11 observation frames in accordance with the conventional search method being replaced by 6 observation frames with the combined search method for characteristic data packets and data packets to be detected, and continuously or depending on at least one criterion which depends on the relationship between effort and benefit or on fulfilment of conditions which are oriented towards the benefit-effort relationship, fewer than 6 observation frames being used.

43. Mobile station (MS) in accordance with one of the claims 18 to 31, with 11 observation frames in accordance with the conventional search method being replaced by 6 observation frames with the combined search method for characteristic data packets and data packets to be detected, and continuously or depending on at least one criterion which depends on the relationship between effort and benefit or on fulfilment of conditions which are oriented towards the benefit-effort relationship, fewer than 6 observation frames being used.
